# EUROPEAN PATENT SPECIFICATION

(11) **EP 1 770 121 B1**
(45) Date of publication and mention of the grant of the patent: **01.10.2008**
(21) Application number: 06120732.0
(22) Date of filing: 15.09.2006
(51) Int. Cl.: C08K 7/22, C08L 9/00, B60C 1/00

(54) **Pneumatic tire having a rubber component containing zinc organic framework material**
Luftreifen umfassend eine Kautschukkomponente enthaltend ein zinkorganisches Gerüstmaterial
Pneumatique comprenant un component de caoutchouc contenant un materiau structural à base d'organo-zinc

(30) Priority: 21.09.2005 US 719441 P
(43) Date of publication of application: 04.04.2007
(73) Proprietor: THE GOODYEAR TIRE & RUBBER COMPANY, Akron, OH 44316-0001 (US)
(72) Inventor: Koster, Georges, L-8436 Steinfort (LU); Boes, Claude Ernest Felix, L-9147 Erpeldange (LU); Zimmer, Rene Jean, L-1232 Howald (LU); Fuchs, Hans-Bernd, D-54329 Konz (DE); Ozel, Fahri, L-8480 Eischen (LU); Lauer, Wolfgang Albert, L-7570 Mersch (LU); Braun, Lothar Claus, D-54669 Bollendorf (DE)
(74) Representative: Kutsch, Bernd

(56) References cited:
- US-A1- 2003 004 364
- US-A1- 2004 225 134
- ROWSELL J L C ET AL: "Metal-organic frameworks: a new class of porous materials" MICROPOROUS AND MESOPOROUS MATERIALS, ELSEVIER SCIENCE PUBLISHING, NEW YORK, US, vol. 73, no. 1-2, 6 August 2004 (2004-08-06), pages 3-14, XP004522126 ISSN: 1387-1811

## Description

### Background of the Invention

Pneumatic rubber tires are conventionally prepared with a rubber tread, which is often a blend of various rubbers and additives including curing agents. The characteristics of the curing agents are a significant factor in determining various properties of a rubber composition with which the curatives are compounded. Conventionally tire tread rubber compositions for example use sulfur, accelerators such as sulfenamides, stearic acid, and zinc oxide to impart the desired cure and performance characteristics. Performance characteristics may include, for example, traction and rolling resistance.

It is believed to be conventional wisdom that a tire tread composition designed to improve tread traction on the road usually results in a tire's increased tire rolling resistance. Similarly, modifying a tire tread composition to improve (reduce) a tire's rolling resistance usually results in a reduction in the tire tread traction and/or treadwear resistance. It is usually difficult to impart both high abrasion resistance and high resilience to the rubber at the same time, because the requirements have been thought to be somewhat contradictory with each other from the perspective of the properties of the granular carbon black in the rubber. These aspects involving a trade-off of tire, or tire tread, properties (traction, rolling resistance and treadwear) are well known to those having skill in such art. Thus, selection of various additives including curatives tend to play a role in the ultimate properties of the rubber composition. There therefore exists a continuing need to improve the quality and performance of rubber compounds for use in tires.

Recently it has become desirable to reduce the amount of zinc in the tire rubber. It would therefore also be desirable to have a rubber compound and pneumatic tire cured using a cure system with the potential for a reduced zinc content in the rubber composition.

### Summary of the Invention

The present invention relates to a pneumatic tire according to claim 1. Dependent claims refer to prefered embodiments of the invention.

### Detailed Description of the Invention

There is disclosed a pneumatic tire comprising at least one component, said at least one component comprising a rubber composition, said rubber composition comprising at least one diene based rubber; and at least one metal organic framework material comprising divalent zinc and a multidentate organic ligand.

As disclosed in US-B- 5,648,508 and US-B- 6,893,564, so-called metal organic framework materials comprise at least one metal ion and at least one at least bidentate, or multidentate, organic compound which is coordinately bonded to said metal ion, and contain at least one type of micro- and mesopores or micro- or mesopores.

The disclosure of US-B- 6,893,564 and its teaching regarding metal-organic framework materials at column 2, line 20, through column 4, line 48 is fully incorporated herein by reference and is reproduced substantially as follows.

The metal-organic framework material is described in, for example, US-B- 5,648,508, EP-A-0 709 253, M. O'Keeffe et al., J. Sol. State Chem., 152 (2000) Page 3 through 20, H. Li et al., Nature 402 (1999) Page 276 seq., M. Eddaoudi et al., Topics in Catalysis 2 (1999) Pages 105 through 111, B and Chen et al., Science 291 (2001) Pages 1021 through 23. An inexpensive way for the preparation of said materials is the subject of DE-A-10111230.

The metal-organic framework materials, as used in the present invention, comprise pores, particularly micro- and/or mesopores. Micropores are defined as being pores having a diameter of 2 nm or below and mesopores as being pores having a diameter in the range of 2 nm to 50 nm, according to the definition given in Pure Applied Chem. 45, Page 71 seq., particularly on Page 79 (1976). The presence of the micro- and/or mesopores can be monitored by sorption measurements which determine the capacity of the metal-organic framework materials for nitrogen uptake at 77 K according to DIN 66131 and/or DIN 66134.

For example, a type-I-form of the isothermal curve indicates the presence of micropores [see, for example, Paragraph 4 of M. Eddaoudi et al., Topics in Catalysis 9 (1999)]. In a preferred embodiment, the specific surface area, as calculated according to the Langmuir model (DIN 66131, 66134) preferably is above 5 m²/g, further preferred above 10 m²/g, more preferably above 50 m²/g, particularly preferred above 500 m²/g and may increase into the region above 3000 m²/g.

As to the metal component within the framework material that is to be used according to the present invention, particularly to be mentioned is divalent zinc metal ion Zn²⁺, of interest in the curing of the rubber composition. Further reference herein to metal organic framework materials assumes that the metal ion therein is the divalent zinc ion Zn²⁺.

In addition to the metal salts disclosed in EP-A 0 790 253 and US-B-5,648,508, other metallic compounds can be used, such as sulfates, phosphates and other complex counter-ion metal salts of the main- and subgroup metals of the periodic system of the elements. Metal oxides, mixed oxides and mixtures of metal oxides and/or mixed oxides with or without a defined stoichiometry are preferred.

As to the at least bidentate (or multidentate) organic compound, which is capable of coordination with the metal ion, in principle all compounds can be used which are suitable for this purpose and which fulfill the above requirements of being at least bidentate. Said organic compound must have at least two centers, which are capable to coordinate the metal ions of a metal salt, particularly with the metals of the aforementioned groups. With regard to the at least bidentate organic compound, specific mention is to be made of compounds having i) an alkyl group substructure, having from 1 to 10 carbon atoms, ii) an aryl group substructure, having from 1 to 5 phenyl rings, iii) an alkyl or aryl amine substructure, consisting of alkyl groups having from 1 to 10 carbon atoms or aryl groups having from 1 to 5 phenyl rings, said substructures having bound thereto at least one at least bidentate functional group "X", which is covalently bound to the substructure of said compound, and wherein X is selected from the group consisting of CO₂H, CS₂H, NO₂, SO₃H, Si(OH)₃, Ge(OH)₃, Sn(OH)₃, Si(SH)₄, Ge(SH)₄, Sn(SH)₃, PO₃H, AsO₃H, AsO₄H, P(SH)₃, As(SH)₃, CH(RSH)₂, C(RSH)₃, CH(RNH₂)₂, C(RNH₂)₃, CH(ROH)₂, C(ROH)₃, CH(RCN)₂, C(RCN)₃, wherein R is an alkyl group having from 1 to 5 carbon atoms, or an aryl group consisting of 1 to 2 phenyl rings, and CH(SH)₂, C(SH)₃, CH(NH₂)₂, C(NH₂)₂, CH(OH)₂, C(OH)₃, CH(CN)₂ and C(CN)₃.

Particularly to be mentioned are substituted or unsubstituted, mono- or polynuclear aromatic di-, tri- and tetracarboxylic acids and substituted or unsubstituted, at least one hetero atom comprising aromatic di-, tri- and tetracarboxylic acids, which have one or more nuclei.

A preferred ligand is 1,3,5-benzene tricarboxylic acid (BCT). Further preferred ligands are ADC (acetylene dicarboxylate), NDC (naphtalene dicarboxylate), BDC (benzene dicarboxylate, also known as terephthalate), ATC (adamantane tetracarboxylate), BTC (benzene tricarboxylate), BTB (benzene tribenzoate), MTB (methane tetrabenzoate) and ATB (adamantane tribenzoate).

Besides the at least bidentate organic compound, the framework material as used in accordance with the present invention may also comprise one or more monodentate ligand(s), which is/are preferably selected from the following monodentate substances and/or derivatives thereof: a) alkyl amines and their corresponding alkyl ammonium salts, containing linear, branched, or cyclic aliphatic groups, having from 1 to 20 carbon atoms (and their corresponding ammonium salts); b) aryl amines and their corresponding aryl ammonium salts having from 1 to 5 phenyl rings; c) alkyl phosphonium salts, containing linear, branched, or cyclic aliphatic groups, having from 1 to 20 carbon atoms; d) aryl phosphonium salts, having from 1 to 5 phenyl rings; e) alkyl organic acids and the corresponding alkyl organic anions (and salts) containing linear, branched, or cyclic aliphatic groups, having from 1 to 20 carbon atoms; f) aryl organic acids and their corresponding aryl organic anions and salts, having from 1 to 5 phenyl rings; g) aliphatic alcohols, containing linear, branched, or cyclic aliphatic groups, having from 1 to 20 carbon atoms; h) aryl alcohols having from 1 to 5 phenyl rings; i) inorganic anions from the group consisting of sulfate, nitrate, nitrite, sulfite, bisulfite, phosphate, hydrogen phosphate, dihydrogen phosphate, diphosphate, triphosphate, phosphite, chloride, chlorate, bromide, bromate, iodide, iodate, carbonate, bicarbonate, and the corresponding acids and salts of the aforementioned inorganic anions; j) ammonia, carbon dioxide, methane, oxygen, ethylene, hexane, benzene, toluene, xylene, chlorobenzene, nitrobenzene, naphthalene, thiophene, pyridine, acetone, 1-2-dichloroethane, methylenechloride, tetrahydrofuran, ethanolamine, triethylamine and trifluoromethylsulfonic acid.

Further details regarding the at least bidentate organic compounds and the monodentate substances, from which the ligands of the framework material as used in the present application are derived, can be taken from EP-A 0 790 253.

In one embodiment, framework materials of the kind described herein, which comprise Zn²⁺ as a metal ion and ligands derived from terephthalic acid as the bidentate compound, are particularly preferred. Said framework materials are known as MOF-5 in the literature.

Further metal ions, at least bidentate organic compounds and monodentate substances, which are respectively useful for the preparation of the framework materials used in the present invention as well as processes for their preparation are particularly disclosed in EP-A 0 790 253, US-B- 5,648,508 and DE-A- 10111230.

As solvents, which are particularly useful for the preparation of MOF-5, in addition to the solvents disclosed in the above-referenced literature, dimethyl formamide, diethyl formamide and N-methylpyrollidone, alone, in combination with each other or in combination with other solvents may be used. Within the preparation of the framework materials, particularly within the preparation of MOF-5, the solvents and mother liquors are recycled after crystallization in order to save costs and materials.

The pore sizes of the metal-organic framework can be adjusted by selecting suitable organic ligands and/or bidendate compounds (=linkers). Generally, the larger the linker, the larger the pore size. Any pore size that is still supported by a the metal-organic framework in the absence of a host and at temperatures of at least 200°C is conceivable. Pore sizes ranging from 0.2 nm to 30 nm are preferred, with pore sizes ranging from 0.3 nm to 3 nm being particularly preferred.

Examples of metal-organic framework materials (MOFs) are as given in US-B- 6,893,564, in the table starting at column 5, line 1, and continuing to column 20, line 31. A list of metal-organic framework materials already synthesized and characterized is given therein. This also includes novel isoreticular metal organic framework materials (IR-MOFs), which may be used in the framework of the present application. Such materials having the same framework topology while displaying different pore sizes and crystal densities are described, for example in M. Eddouadi et al., Science 295 (2002) 469.

Examples for the synthesis of these materials as such can, for example, be found in: J. Am. Chem. Soc. 123 (2001) Pages 8241 seq. or in Acc. Chem. Res. 31 (1998) Pages 474 seq..

The separation of the framework materials, particularly of MOF-5, from the mother liquor of the crystallization may be achieved by procedures known in the art such as solid-liquid separations, centrifugation, extraction, filtration, membrane filtration, cross-flow filtration, flocculation using flocculation adjuvants (non-ionic, cationic and anionic adjuvants) or by the addition of pH shifting additives such as salts, acids or bases, by flotation, as well as by evaporation of the mother liquor at elevated temperature and/or in vacuo and concentrating of the solid. The material obtained in this step is typically a fine powder and cannot be used for most practical applications, e.g., in catalysis, where shaped bodies are required.

In one embodiment, 0.1 to 50 phr of zinc organic framework material is present in the rubber component of the tire. In another embodiment, from 0.5 to 20 phr of zinc organic framework material is present in the rubber component of the tire.

In addition to the zinc organic framework material, the rubber component contains at least one rubber containing olefinic unsaturation. The phrases "rubber or elastomer containing olefinic unsaturation" or "diene based rubbers" are intended to include both natural rubber and its various raw and reclaim forms as well as various synthetic rubbers. In the description of this invention, the terms "rubber" and " elastomer" may be used interchangeably, unless otherwise prescribed. The terms "rubber composition", "compounded rubber" and "rubber compound" are used interchangeably to refer to rubber which has been blended or mixed with various ingredients and materials. Representative synthetic polymers are the homopolymerization products of butadiene and its homologues and derivatives, for example, methylbutadiene, dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis-1,4-polybutadiene), polyisoprene (including cis-1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/ dicyclopentadiene terpolymers. Additional examples of rubbers which may be used include alkoxy-silyl end functionalized solution polymerized polymers (SBR, PBR, IBR and SIBR), silicon-coupled and tin-coupled star-branched polymers. The preferred rubber or elastomers are natural rubber, synthetic polyisoprene, polybutadiene and SBR.

In one aspect the rubber is preferably of at least two of diene based rubbers. For example, a combination of two or more rubbers is preferred such as cis 1,4-polyisoprene rubber (natural or synthetic, although natural is preferred), 3,4-polyisoprene rubber, styrene/isoprene/butadiene rubber, emulsion and solution polymerization derived styrene/butadiene rubbers, cis 1,4-polybutadiene rubbers and emulsion polymerization prepared butadiene/acrylonitrile copolymers.

In one aspect of this invention, an emulsion polymerization derived styrene/butadiene (E-SBR) might be used having a relatively conventional styrene content of about 20 to about 28 percent bound styrene or, for some applications, an E-SBR having a medium to relatively high bound styrene content, namely, a bound styrene content of about 30 to about 45 percent.

The relatively high styrene content of about 30 to about 45 for the E-SBR can be considered beneficial for a purpose of enhancing traction, or skid resistance, of the tire tread. The presence of the E-SBR itself is considered beneficial for a purpose of enhancing processability of the uncured elastomer composition mixture, especially in comparison to a utilization of a solution polymerization prepared SBR (S-SBR).

By emulsion polymerization prepared E-SBR, it is meant that styrene and 1,3-butadiene are copolymerized as an aqueous emulsion. The bound styrene content can vary, for example, from 5 to 50 percent. In one aspect, the E-SBR may also contain acrylonitrile to form a terpolymer rubber, as E-SBAR, in amounts, for example, of 2 to 30 weight percent bound acrylonitrile in the terpolymer.

Emulsion polymerization prepared styrene/butadiene/acrylonitrile copolymer rubbers containing 2 to 40 weight percent bound acrylonitrile in the copolymer are also contemplated as diene based rubbers for use in this invention.

The solution polymerization prepared SBR (S-SBR) typically has a bound styrene content in a range of 5 to 50, preferably 9 to 36, percent. The S-SBR can be conveniently prepared, for example, by organo lithium catalyzation in the presence of an organic hydrocarbon solvent.

A purpose of using S-SBR is for improved tire rolling resistance as a result of lower hysteresis when it is used in a tire tread composition.

The rubber composition may optionally include from 0 to 20 phr of 3,4-polyisoprene rubber. The 3,4-polyisoprene rubber (3,4-PI) is considered beneficial for a purpose of enhancing the tire's traction when it is used in a tire tread composition. The Tg refers to the glass transition temperature which can conveniently be determined by a differential scanning calorimeter at a heating rate of 10°C per minute.

The cis 1,4-polybutadiene rubber (BR) is considered to be beneficial for a purpose of enhancing the tire tread's wear, or treadwear. Such BR can be prepared, for example, by organic solution polymerization of 1,3-butadiene. The BR may be conveniently characterized, for example, by having at least a 90 percent cis 1,4-content.

The term "phr" as used herein, and according to conventional practice, refers to "parts by weight of a respective material per 100 parts by weight of rubber, or elastomer."

The rubber composition may also include up to 70 phr of processing oil. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils include various oils as are known in the art, including aromatic, paraffinic, napthenic, vegetable oils, and low PCA oils, such as MES, TDAE, SRAE and heavy naphthenic oils. Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom.

The vulcanizable rubber composition may include from 10 to 150 phr of silica.

The commonly employed siliceous pigments which may be used in the rubber compound include conventional pyrogenic and precipitated siliceous pigments (silica). In one embodiment, precipitated silica is used. The conventional siliceous pigments employed in this invention are precipitated silicas such as, for example, those obtained by the acidification of a soluble silicate, e.g., sodium silicate.

Such conventional silicas might be characterized, for example, by having a BET surface area, as measured using nitrogen gas. In one embodiment, the BET surface area may be in the range of 40 to 600 square meters per gram. In another embodiment, the BET surface area may be in a range of 80 to 300 square meters per gram. The BET method of measuring surface area is described in the Journal of the American Chemical Society, Volume 60, Page 304 (1930).

The conventional silica may also be characterized by having a dibutylphthalate (DBP) absorption value in a range of 100 to 400, alternatively 150 to 300.

The conventional silica might be expected to have an average ultimate particle size, for example, in the range of 0.01 to 0.05 micron as determined by the electron microscope, although the silica particles may be even smaller, or possibly larger, in size.

Various commercially available silicas may be used, such as, only for example herein, and without limitation, silicas commercially available from PPG Industries under the Hi-Sil trademark with designations 210, 243, etc; silicas available from Rhodia, with, for example, designations of Z1165MP and Z165GR and silicas available from Degussa AG with, for example, designations VN2 and VN3, etc.

The vulcanizable rubber composition may include from 1 to 150 phr of carbon black.

Commonly employed carbon blacks can be used as a conventional filler. Representative examples of such carbon blacks include N110, N121, N 134, N220, N231, N234, N242, N293, N299, N315, N326, N330, M332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 145 g/kg and DBP number ranging from 34 to 150 cm³/100 g.

Other fillers may be used in the rubber composition including, but not limited to, particulate fillers including ultra high molecular weight polyethylene (UHMWPE), particulate polymer gels including those disclosed in US-B-6,242,534;US-B- 6,207,757; US-B- 6,133,364; US-B- 6,372,857; US-B-5,395,891; or US-B- 6,127,488, and plasticized starch composite filler including that disclosed in US-B- 5,672,639.

In one embodiment the rubber composition for use in the tire tread may contain a conventional sulfur containing organosilicon compound. Examples of suitable sulfur containing organosilicon compounds are of the formula:

Z-Alk-Sₙ-Alk-Z II

in which Z is selected from the group consisting of 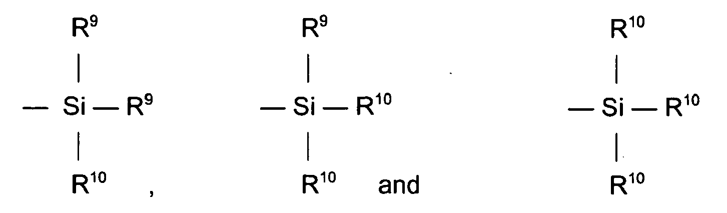 where R⁹ is an alkyl group of 1 to 4 carbon atoms, cyclohexyl or phenyl; R¹⁰ is alkoxy of 1 to 8 carbon atoms, or cycloalkoxy of 5 to 8 carbon atoms; Alk is a divalent hydrocarbon of 1 to 18 carbon atoms and n is an integer of 2 to 8.

In one embodiment, the sulfur containing organosilicon compounds are the 3,3'-bis(trimethoxy or triethoxy silylpropyl) sulfides. In one embodiment, the sulfur containing organosilicon compounds are 3,3'-bis(triethoxysilylpropyl) disulfide and 3,3'-bis(triethoxysilylpropyl) tetrasulfide. Therefore, as to formula II, Z may be 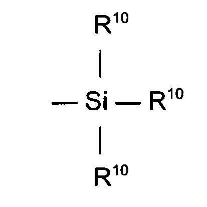 where R¹⁰ is an alkoxy of 2 to 4 carbon atoms, alternatively 2 carbon atoms; alk is a divalent hydrocarbon of 2 to 4 carbon atoms, alternatively with 3 carbon atoms; and n is an integer of from 2 to 5, alternatively 2 or 4.

In another embodiment, suitable sulfur containing organosilicon compounds include compounds disclosed in US-B- 6,608,125. In one embodiment, the sulfur containing organosilicon compounds includes 3-(octanoylthio)-1-propyltriethoxysilane, CH₃(CH₂)₆C(=O)-S-CH₂CH₂CH₂Si(OCH₂CH₃)₃, which is available commercially as NXT^{™} from GE Silicones.

In another embodiment, suitable sulfur containing organosilicon compounds include those disclosed in US-A- 2003/0130535. In one embodiment, the sulfur containing organosilicon compound is Si-363 from Degussa.

The amount of the sulfur containing organosilicon compound in a rubber composition will vary depending on the level of other additives that are used. Generally speaking, the amount of the compound will range from 0.5 to 20 phr. In one embodiment, the amount will range from 1 to 10 phr.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. In one embodiment, the sulfur-vulcanizing agent is elemental sulfur. The sulfur-vulcanizing agent may be used in an amount ranging from 0.5 to 8 phr. Typical amounts of tackifier resins, if used, comprise 0.5 to 10 phr, usually 1 to 5 phr. Typical amounts of processing aids comprise 1 to 50 phr. Typical amounts of antioxidants comprise 1 to 5 phr. A representative antioxidant may be, for example, diphenyl-p-phenylenediamine. Typical amounts of antiozonants comprise 1 to 5 phr. Typical amounts of fatty acids, if used, which can include stearic acid comprise 0.5 to 3 phr. Typical amounts of zinc oxide comprise 2 to 5 phr; however, to reduce the amount of total zinc in the compound lesser amounts or none may be used. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 to 4. In another embodiment, combinations of a primary and a secondary accelerator might be used with the secondary accelerator being used in smaller amounts, such as from 0.05 to 3 phr, in order to activate and to improve the properties of the vulcanizate. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be a guanidine, dithiocarbamate or thiuram compound.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions, and the volume and nature of the components. For example, the thermomechanical working may be from 1 to 20 minutes.

The rubber composition may be incorporated in a variety of rubber components of the tire. For example, the rubber component may be a tread (including tread cap and tread base), sidewall, apex, chafer, sidewall insert, wirecoat or innerliner. In one embodiment, the compound is a tread.

The pneumatic tire of the present invention may be a race tire, passenger tire, aircraft tire, agricultural, earthmover, off-the-road, truck tire, and the like. In one embodiment, the tire is a passenger or truck tire.

Vulcanization of the pneumatic tire of the present invention is generally carried out at conventional temperatures ranging from 100°C to 200°C. Any of the usual vulcanization processes may be used such as heating in a press or mold, heating with superheated steam or hot air. Such tires can be built, shaped, molded and cured by various methods which are known and will be readily apparent to those having skill in such art.

The invention is further illustrated by the following examples.

### Example 1

A metal organic framework MOF-5 comprising zinc and terephthalate ligand is made as disclosed in US-B- 6,893,564. As disclosed therein at column 24, line 33 through column 25, line 3 and reproduced substantially as follows, for the Preparation of MOF-5 the following starting materials were used:

| | | | |
|---|---|---|---|
| Starting Material | Molar Amount | Calculated | Experimental |
| Terephthalic acid | 12.3 mmol | 2.04 g | 2.04 g |
| Zinc nitrate-tetra hydrate | 36.98 mmol | 9.67 g | 9.68 g |
| Diethylformamide | 2568.8 mmol | 282.2 g | 282.2 g |

The respective amounts of the starting materials given in the table above were placed in a beaker in the order diethylformamide, terephthalic acid and zinc nitrate. The resulting solution was introduced into two autoclaves (250 ml), having inner walls which were covered by teflon.

The crystallization occurred at 105°C and within twenty hours. Subsequently, the orange solvent was decanted from the yellow crystals, said crystals were again covered by 20 ml dimethylformamide, the latter again being decanted. This procedure was repeated three times. Subsequently, 20 ml chloroform were poured onto the solid, which was washed and decanted by said solvent two times. The crystals (14.4 g), which were still moist, were introduced into a vacuum device and first dried at room temperature in vacuo (10⁻⁴ mbar). Afterwards, they were dried at 120°C.

Subsequently, the resulting product was characterized by X-ray powder diffraction and an adsorptive determination of micropores. The determination of the sorption isotherm with argon (87K; Micromeritics ASAP 2010) shows an isotherm of the type I, being characteristic of microporous materials and having a specific surface area of 3020 m²/g, calculated according to Langmuir, as well as a micropore volume of 0.97 ml/g (at a relative pressure of p/p⁰=0.4).

## Claims

1. A pneumatic tire **characterized by** least one component, said at least one component comprising a rubber composition, said rubber composition comprising
at least one diene based rubber; and
at least one metal organic framework material comprising divalent zinc and a multidentate organic ligand.

2. The pneumatic tire of claim 1 wherein the at least one metal organic framework material is MOF-5.

3. The pneumatic tire of claim 1 or 2 wherein the multidentate organic ligand is selected from substituted or unsubstituted, mono- or polynuclear aromatic di-, tri- and tetracarboxylic acids and substituted or unsubstituted, at least one hetero atom comprising aromatic di-, tri- and tetracarboxylic acids, which have one or more nuclei.

4. The pneumatic tire of at least one of the preceding claims wherein the multidentate ligand is selected from the group consisting of benzenedicarboxylate, 1,3,5-benzene tricarboxylic acid, acetylene dicarboxylate, naphtalene dicarboxylate, adamantane tetracarboxylate, benzene tricarboxylate, benzene tribenzoate, methane tetrabenzoate, and adamantane tribenzoate.

5. The pneumatic tire of claim 4 wherein the multidentate organic ligand is 1,4-benzenedicarboxylate.

6. The pneumatic tire of claim at least one of the preceding claims wherein the rubber composition comprises
100 parts by weight of said at least one diene based rubber; and
from 0.1 to 50 parts by weight of said at least one metal organic framework material comprising divalent zinc and a multidentate organic ligand.

7. The pneumatic tire of at least one of the preceding claims wherein the at least one diene based rubber is selected from the group consisting of polychloroprene, polybutadiene, polyisoprene, butyl rubber, chlorobutyl rubber, bromobutyl rubber, styrene/isoprene/butadiene rubber, copolymers of 1,3-butadiene with styrene, copolymers of 1,3-butadiene with acrylonitrile, copolymers of 1,3-butadiene with methyl methacrylate, copolymers of isoprene with styrene, copolymers of isoprene with acrylonitrile, and copolymers of isoprene with methyl methacrylate.

8. The pneumatic tire of claim 1 wherein the component further comprises 10 to 250 phr of a filler selected from carbon black and silica.

9. The pneumatic tire of at least one of the preceding claims wherein said component is selected from the group consisting of a tread cap, sidewall, apex, chafer, sidewall insert, innerliner, wirecoat and ply coat.

10. The pneumatic tire of at least one of the preceding claims wherein the rubber composition comprises from 0.5 to 20 parts by weight of said at least one metal organic framework material comprising divalent zinc and a multidentate organic ligand.

## Patentansprüche

1. Luftreifen, **gekennzeichnet durch** mindestens eine Komponente, wobei die mindestens eine Komponente eine Kautschukzusammensetzung umfasst, wobei die Kautschukzusammensetzung
mindestens einen dienbasierten Kautschuk; und
mindestens ein, zweiwertiges Zink und einen vielzähnigen organischen Liganden umfassendes metallorganisches Gerüstmaterial umfasst.

2. Luftreifen nach Anspruch 1, wobei das mindestens eine metallorganische Gerüstmaterial MOF-5 ist.

3. Lufreifen nach Anspruch 1 oder 2, wobei der vielzähnige organische Ligand aus substituierten oder unsubstituierten, mono- oder polynuklearen aromatischen Di-, Tri- und Tetracarboxylsäuren und substituierten oder unsubstituierten, mindestens ein Heteroatom umfassenden aromatischen Di-, Tri- und Tetracarboxylsäuren, die einen oder mehrere Kerne aufweisen, ausgewählt ist.

4. Luftreifen nach mindestens einem der vorgenannten Ansprüche, wobei der vielzähnige Ligand aus der Gruppe ausgewählt ist, bestehend aus Benzoldicarboxylat, 1,3,5-Benzoltricarboxylsäure, Acetylendicarboxylat, Naphthalendicarboxylat, Adamantantetracarboxylat, Benzoltricarboxylat, Benzoltribenzoat, Methantetrabenzoat und Adamantantribenzoat.

5. Luftreifen nach Anspruch 4, wobei der vielzähnige organische Ligand 1,4-Benzoldicarboxylat ist.

6. Luftreifen nach mindestens einem der vorgenannten Ansprüche, wobei die Kautschukzusammensetzung
100 Gewichtsteile des mindestens einen dienbasierten Kautschuks; und
0,1 bis 50 Gewichtsteile des mindestens einen, zweiwertiges Zink und einen vielzähnigen organischen Liganden umfassenden metallorganischen Gerüstmaterials umfasst.

7. Luftreifen nach mindestens einem der vorgenannten Ansprüche, wobei der mindestens eine dienbasierte Kautschuk aus der Gruppe ausgewählt ist, bestehend aus Polychloropren, Polybutadien, Polyisopren, Butylkautschuk, Chlorbutylkautschuk, Brombutylkautschuk, Styrol-Isopren-Butadien-Kautschuk, Copolymeren von 1,3-Butadien mit Styrol, Copolymeren von 1,3-Butadien mit Acrylnitril, Copolymeren von 1,3-Butadien mit Methylmethacrylat, Copolymeren von Isopren mit Styrol, Copolymeren von Isopren mit Acrylnitril und Copolymeren von Isopren mit Methylmethacrylat.

8. Luftreifen nach Anspruch 1, wobei die Komponente weiter 10 bis 250 ThK eines aus Carbon Black und Silika ausgewählten Füllstoffs umfasst.

9. Luftreifen nach mindestens einem der vorgenannten Ansprüche, wobei die Komponente aus der Gruppe ausgewählt ist, bestehend aus einem Laufstreifenoberteil, einer Seitenwand, einem Kernprofil, einem Wulstschutzstreifen, einem Seitenwandeinsatz, einer Innenisolierung, einem Drahtüberzug und einem Karkassenlagenüberzug.

10. Luftreifen nach mindestens einem der vorgenannten Ansprüche, wobei die Kautschukzusammensetzung 0,5 bis 20 Gewichtsteile des mindestens einen, zweiwertiges Zink und einen vielzähnigen organischen Liganden umfassenden metallorganischen Gerüstmaterials umfasst.

## Revendications

1. Bandage pneumatique **caractérisé par** au moins un composant, ledit au moins un composant comprenant une composition de caoutchouc, ladite composition de caoutchouc comprenant :
au moins un caoutchouc à base diénique ; et
au moins une matière organométallique d'encadrement comprenant du zinc divalent et un ligand organique polyvalent.

2. Bandage pneumatique, dans lequel ladite au moins une matière organométallique d'encadrement est du MoF₅.

3. Bandage pneumatique selon la revendication 1 ou 2, dans lequel le ligand organique polyvalent est choisi parmi le groupe comprenant des acides dicarboxyliques, tricarboxyliques et tétracarboxyliques aromatiques mononucléaires ou polynucléaires substitués ou non substitués, au moins un hétéroatome comprenant des acides dicarboxyliques, tricarboxyliques et tétracarboxyliques aromatiques qui comprennent un ou plusieurs noyaux.

4. Bandage pneumatique selon au moins une des revendications précédentes, dans lequel le ligand polyvalent est choisi parmi le groupe constitué par le dicarboxylate de benzène, l'acide 1,3,5-benzènetricarboxylique, le dicarboxylate d'acétylène, le dicarboxylate de naphtalène, le tétracarboxylate d'adamantane, le tricarboxylate de benzène, le tribenzoate de benzène, le tétrabenzoate de méthane et le tribenzoate d'adamantane.

5. Bandage pneumatique selon la revendication 4, dans lequel le ligand organique polyvalent est le dicarboxylate de 1,4-benzène.

6. Bandage pneumatique selon au moins une des revendications précédentes, dans lequel la composition de caoutchouc comprend :
ledit au moins un caoutchouc à base diénique à concurrence de 100 parties en poids ; et
ladite au moins une matière organométallique d'encadrement comprenant du zinc divalent et un ligand organique polyvalent, à concurrence de 0,1 à 50 parties en poids.

7. Bandage pneumatique selon au moins une des revendications précédentes, dans lequel ledit au moins un caoutchouc à base diénique est choisi parmi le groupe constitué par le polychloroprène, le polybutadiène, le polyisoprène, le caoutchouc butyle, le caoutchouc chlorobutyle, le caoutchouc bromobutyle, le caoutchouc de styrène/isoprène/butadiène, des copolymères du 1,3-butadiène avec du styrène, des copolymères du 1,3-butadiène avec de l'acrylonitrile, des copolymères du 1,3-butadiène avec du méthacrylate de méthyle, des copolymères de l'isoprène avec du styrène, des copolymères de l'isoprène avec de l'acrylonitrile, et des copolymères d'isoprène avec du méthacrylate de méthyle.

8. Bandage pneumatique selon la revendication 1, dans lequel le composant comprend en outre une matière de charge choisie parmi le noir de carbone et la silice, à concurrence de 10 à 250 phr.

9. Bandage pneumatique selon au moins une des revendications précédentes, dans lequel ledit composant est choisi parmi le groupe constitué par une chape de bande de roulement, un flanc, un bourrage sur tringle, une bandelette-talon, une pièce rapportée pour flanc, un calandrage intérieur, un enrobage de fils et un revêtement de nappe.

10. Bandage pneumatique selon au moins une des revendications précédentes, dans lequel la composition de caoutchouc comprend ladite au moins une matière organométallique d'encadrement comprenant du zinc divalent et un ligand organique polyvalent, à concurrence de 0,5 à 20 parties en poids.
